# EUROPÄISCHE PATENTANMELDUNG

(11) **EP 4 496 046 A1**
(43) Veröffentlichungstag der Anmeldung: **22.01.2025**
(21) Anmeldenummer: 24186698.7
(22) Anmeldetag: 05.07.2024
(51) Int. Cl.: H01M 8/0245, H01M 8/026, H01M 8/18

(54) **REDOX-FLOW-CONVERTER**

(30) Priorität: 11.07.2023 DE 102023118254
(71) Anmelder: Schaeffler Technologies AG & Co. KG, 91074 Herzogenaurach (DE)
(72) Erfinder: Schmitt, Guenter, 91353 Hausen (DE); Sulzer, Sebastian, 90765 Fürth (DE); Vornehm, Martin, 77815 Bühl (DE); Baier, Richard, 91086 Aurachtal (DE); Yao, Yuan, 91074 Herzogenaurach (DE); Böttcher, Daniel, 91052 Erlangen (DE)

(57) **Zusammenfassung**

Ein Redox-Flow-Converter (1) umfasst eine Mehrzahl an Redox-Flow-Zellen (2), welche unter anderem Elektrodenplatten (3) sowie fluidleitende Strukturen aufweisen. Die fluidleitenden Strukturen sind durch einen auf der Elektrodenplatte (3) aufliegenden, mit Schlitzen (8) versehenen Filz (6) gebildet.

## Beschreibung

Die Erfindung betrifft einen nach dem Oberbegriff des Anspruchs 1 gestalteten Redox-Flow-Converter, welcher eine Mehrzahl an Redox-Flow-Zellen umfasst, wobei die einzelnen Redox-Flow-Zellen unter anderem Elektrodenplatten sowie fluidleitende Strukturen aufweisen.

Ein derartiger Redox-Flow-Converter ist zum Beispiel aus der WO 2019/166324 A1 bekannt. Die Zellen der Redox-Flussbatterie nach der WO 2019/166324 A1 sind in gängiger Weise jeweils durch eine Membran in Halbzellen unterteilt. Die Halbzellen umfassen einen Stromableiter und ein Elektrodenelement, welches in einem von einem Elektrolyten durchströmbaren Innenraum der jeweiligen Halbzelle angeordnet ist. Die Elektrodenelemente weisen eine Elektrode sowie eine Leitstruktur auf, welche zum Leiten des Elektrolyten ausgebildet ist. Als Materialien zur Herstellung der Elektrode sind in der WO 2019/166324 A1 unter anderem Vlies und Papier genannt.

Redox-Flow-Converter stellen elektrochemische Energiewandler dar, die allgemein auch als Durchflussbatterien bezeichnet werden und zur Umwandlung von chemisch gebundener Energie in elektrische Energie oder umgekehrt vorgesehen sind. Gegenüber Akkumulatoren haben Redox-Flow-Systeme den Vorteil, dass Leistung und Kapazität unabhängig voneinander skalierbar sind.

Ein in der EP 2 648 257 beschriebener, als Redox-Flow-Converter ausgebildeter Energiewandler umfasst mindestens eine Reaktionszelle mit zwei Elektroden, nämlich Bipolarplatte und/oder Kollektorplatte, sowie eine ionenleitende Membran. Sofern Einzelzellen elektrisch zusammengeschaltet sind, werden diese nach der EP 2 648 257 A1 mit Elektrolyten in Parallelschaltung versorgt. Zu diesem Zweck ist eine Zirkulationsanordnung für einen Elektrolyten vorgesehen, wobei Kopfbereiche einer Zellzuleitung und/oder Zellableitung isoliert sein können.

Die DE 10 2013 107 516 A1 offenbart eine Zelle sowie einen Zellstack, das heißt Zellenstapel, einer Redox-Flow-Batterie. Die Redox-Flow-Batterie nach der DE 10 2013 107 516 A1 umfasst Zellrahmenelemente, in welchen Kanäle ausgebildet sind, sodass Zelleninnenräumen von unterschiedlichen Elektrolytlösungen durchströmt werden können. Ein Zellrahmenelement ist mit einer Membran einer Zelle, zwei Elektroden und weiteren Zellrahmenelementen verschweißt.

Ein in der WO 2014/198364 A1 beschriebenes Elektrodenmodul für eine Redox-Flow-Batterie umfasst eine Elektrode und einen Dichtrahmen, wobei die Elektrode mit dem Dichtrahmen mechanisch verbunden ist.

In der WO 2018/004466 A1 ist ein möglicher Aufbau einer Bipolarplatte einer Redox-Flow-Batterie beschrieben. Die Bipolarplatte umfasst unter anderem ein kohlenstoffhaltiges filzartiges Material. Auf beiden Seiten der Bipolarplatte befinden sich Reaktionszonen, welche fluidtechnisch mit weiteren Bereichen einer Redox-Flow-Batterie verbunden sind. Ferner ist in der WO 2018/004466 A1 eine Monopolarplatte beschrieben, welche ebenfalls ein kohlenstoffhaltiges filzartiges Material umfasst.

Aus der DE 10 2012 024 753 A1 ist ein für die Verwendung in einem elektrochemischen Reaktor, insbesondere einer Redox-Flow-Batterie, vorgesehener Rahmen mit integrierter Bipolarplatte bekannt. Hierbei ist mindestens eine elektrisch leitfähige Bipolarplatte form- und kraftschlüssig in einen Rahmen aus elektrisch isolierendem Material integriert. Durch die Vorrichtung nach der DE 10 2012 024 753 A1 sind mäanderförmige Strömungsführungskanäle und zusätzliche, an diese Kanäle anschließende Strömungsverteilerstrukturen ausgebildet.

Die DE 10 2016 101 716 U1 hat eine Gasdiffusionslage zum Gegenstand, welche zum Einsatz in einem elektrochemischen System oder im Bereich Heizung, Belüftung und Klimatisierung vorgesehen ist. Insbesondere soll die Gasdiffusionslage in einem Befeuchter verwendbar sein. Als Beispiele elektrochemischer Systeme sind in der DE 10 2016 101 716 U1 Brennstoffzellen, elektrochemische Kompressoren und Elektrolyseure genannt. Die Gasdiffusionslage weist in einem be- oder entfeuchtenden Bereich eine senkrecht zu einer Plattenebene verlaufende, durchgehende Perforation auf. Als zur Herstellung der Gasdiffusionslage geeignete Werkstoffe sind unter anderem Polyester und Grafit genannt. Die Gasdiffusionslage könne beispielsweise als Vlies, Gewebe und/oder Gewirke ausgebildet sein. Die Einbringung der Perforation sei mittels Laser oder (Roll-)Stanzen möglich. Unabhängig davon, ob die Gasdiffusionslage nach der DE 10 2016 101 716 U1 in einem elektrochemischen System oder im Bereich Heizung, Belüftung, Klimatisierung zum Einsatz kommen soll, finden in der Gasdiffusionslage oder angrenzend an die Gasdiffusionslage keine chemischen Reaktionen statt.

Die DE 10 2022 112 319 A1 beschreibt ein Bauteil für eine elektrochemische Zelle, nämlich Redox-Flow-Zelle, welches ein Metallsubstrat und ein auf dem Metallsubstrat galvanisch aufgebrachtes Schichtsystem umfasst. Eine erste Schicht des Schichtsystems ist aus Kupfer oder Nickel gebildet, während eine zweite Schicht aus einer Legierung gebildet ist, die beispielsweise Zinn, Kupfer, Nickel oder Silber enthalten kann. In die Legierung sind nichtmetallische Bestandteile, zum Beispiel in Form von Metallsulfiden oder Metalloxiden, eingebunden.

Der Erfindung liegt die Aufgabe zugrunde, einen gegenüber dem genannten Stand der Technik insbesondere unter strömungstechnischen und fertigungstechnischen Aspekten weiterentwickelten Redox-Flow-Converter anzugeben.

Diese Aufgabe wird erfindungsgemäß gelöst durch einen Redox-Flow-Converter mit den Merkmalen des Anspruchs 1. Der Redox-Flow-Converter umfasst in an sich bekannter Grundkonzeption eine Mehrzahl an Redox-Flow-Zellen, welche Elektrodenplatten sowie fluidleitende Strukturen, das heißt zur Leitung von Elektrolytlösungen vorgesehene Strukturen, aufweisen. Gemäß Anspruch 1 sind diese Strukturen durch einen auf der Elektrodenplatte aufliegenden geschlitzten Filz realisiert. Somit ist ein ohnehin flüssigkeitsdurchlässiges Material, nämlich Filz, durch zusätzliche, eine geometrisch definierte Form aufweisende Öffnungen, welche als Schlitze vorliegen, hinsichtlich seiner Eigenschaft, Flüssigkeiten, die in der Redox-Flow-Zelle chemisch reagieren, aufzunehmen und zu leiten, modifiziert.

Es hat sich gezeigt, dass durch die Kombination von Öffnungen geometrisch nicht definierter Form, wie sie innerhalb des gesamten Filzes verteilt sind, mit gesonderten schlitzförmigen Öffnungen, in welcher der Filz vollständig entfernt ist, der Zielkonflikt zwischen einer widerstandsarmen Elektrolytströmung einerseits und einer ausreichenden Durchmischung des Elektrolyten und Benetzung der Elektrodenplatte mit Elektrolytlösung andererseits mit hoher Effizienz entschärft ist.

Gemäß verschiedener möglicher Ausgestaltungen hat die Elektrodenplatte eine rechteckige, nicht quadratische Grundform, wobei die Schlitze, welche sich im Filz befinden, in Längsrichtung der Elektrodenplatte und damit in Durchflussrichtung der Elektrolytlösung ausgerichtet sind. Die schlitzförmige Perforierung des Filzes lässt, anders als zum Beispiel bei S-förmigen Ausstanzungen, praktisch keinerlei Materialverschiebungen durch Kräfte, die strömende Medien ausüben, zu. Die Schlitze können in mehreren Zeilen angeordnet sein, welche sich jeweils in Längsrichtung der Elektrodenplatte erstrecken, wobei die hintereinander angeordneten Schlitze, welche eine erste Zeile bilden, gegenüber ebenfalls hintereinander angeordneten, eine benachbarte Zeile bildenden Schlitzen in Plattenlängsrichtung versetzt sein können. Die gesamte offene Fläche, das heißt die Gesamtfläche der Schlitze, beträgt beispielsweise mindestens 10% und maximal 30% der Grundfläche des Filzes samt Schlitzen.

Insbesondere ist die in Plattenlängsrichtung zu messende Länge eines jeden Schlitzes größer als der in derselben Richtung zu messende Abstand zwischen zwei ein und derselben Zeile zuzurechnenden Schlitzen. Hierbei kann jeder Schlitz an seinen beiden Enden mit zwei Schlitzen in einer benachbarten Zeile überlappen. Dies bedeutet, dass kein orthogonal zur Längsrichtung der Elektrodenplatte sowie des Filzes ausgerichteter Streifen des Filzes existiert, welcher nicht von Schlitzen durchbrochen ist.

Was die Form der einzelnen Schlitze betrifft, existieren zahlreiche Gestaltungsvarianten. Gemäß einer einfachen Variante weist jeder Schlitz eine annähernd über seine gesamte Länge einheitliche Breite auf. Alternativ können die Schlitze zum Beispiel als schmale, in Längsrichtung der Elektrodenplatte ausgerichtete Rauten mit abgerundeten Ecken gestaltet sein.

Gemäß einer möglichen Weiterbildung ist durch die Elektrodenplatte ein Mäanderkanal zur Leitung eines Betriebsmediums zu einem Aktivfeld, in welchem sich der auf der Elektrodenplatte aufliegende Filz befindet, gebildet. Der eine Mäanderform beschreibende Kanal trägt wesentlich zur Reduzierung von Shuntströmen bei.

Als Materialien zur Herstellung der Elektrodenplatte kommen insbesondere metallische Werkstoffe sowie Graphit enthaltende Werkstoffe in Betracht. Ist die Elektrodenplatte als Graphitfolie gestaltet, so kann diese beispielsweise eine Dicke im Bereich von 0,2 bis 0,4 mm aufweisen. Statt einer Folie mit einer einheitlichen Wandstärke kann eine Graphit enthaltende Elektrodenplatte in abgewandelter Form mindestens eine unebene Oberfläche sowie eine uneinheitliche Dicke aufweisen. Eine Strukturierung ist nicht notwendigerweise im Bereich eines Aktivfeldes gegeben. Beispielsweis kann die Elektrodenplatte im Aktivfeld, das heißt in demjenigen Bereich, in welchem sich der geschlitzte Filz befindet und die elektrochemischen Reaktionen stattfinden, komplett eben sein, wogegen in Bereichen außerhalb des Aktivfeldes, insbesondere in Verteilerfeldern, dreidimensionale Strukturen ausgebildet sind. Solche Strukturen sind rationell durch Heißprägen herstellbar.

Im Fall einer metallischen Elektrodenplatte kann insbesondere eine dreidimensionale Strukturierung bei zumindest näherungsweise einheitlicher Wandstärke gegeben sein. Eine solche Strukturierung der Elektrodenplatte liegt beispielsweise in Form zahlreicher kreisförmiger Erhebungen und/oder Vertiefungen vor, durch welche eine Mehrzahl ineinander greifender V-Formen beschrieben ist. Alternativ können Erhebungen und/oder Vertiefungen zum Beispiel leistenförmig gestaltet sein.

Auf der Elektrodenplatte können - unabhängig davon, aus welchem Werkstoff diese gefertigt ist - Dichtungen angeordnet sein. Insbesondere ist die Möglichkeit gegeben, Dichtungen per Siebdruck aufzubringen.

Mehrere elektrochemische Zellen, das heißt Redox-Flow-Zellen, des Redox-Flow-Converters können in Reihe oder parallel geschaltet sein. Beispielsweise sind Gruppen von elektrisch parallel geschalteten Redox-Flow-Zellen gebildet, wobei mehrere derartige Gruppen elektrisch in Reihe geschaltet sind. Jeder einzelnen Gruppe an Redox-Flow-Zellen kann eine Shunt-Platte zugeordnet sein, welche sich an einem Ende der stapelförmig zusammengesetzten, die Gruppe bildenden Zellen befindet. Mindestens ein in der Shunt-Platte ausgebildeter Shunt-Kanal hat insbesondere die bereits erwähnte Mäanderform. Weitere Kanäle entsprechender Form können in den einzelnen Zellen, insbesondere in den Rahmen der Elektrodenplatten, und damit näher an den Aktivfeldern der elektrochemischen Zellen ausgebildet sein, womit insgesamt ein Shuntverluste minimierendes Zweikanalsystem realisiert ist.

Der Redox-Flow-Converter wird beispielsweise mit einem Vanadium-Elektrolyten betrieben. Auch organische Elektrolyte kommen für den Betrieb des Redox-Flow-Converters in Betracht. Allgemein kann der Redox-Flow-Converter als Ganzes oder ein Teil des Redox-Flow-Converters ein monopolares oder bipolares System darstellen.

Dank des strömungstechnisch günstig gestalteten, geometrisch stabilen Filzes, kombiniert mit einer Elektrodenplatte auf Graphitbasis, sind hohe flächenbezogene Maximalströme, beispielsweise im Bereich von 200 bis 250 mA/cm², erzielbar. Die in dem stapelförmig, das heißt als Stack, aufgebauten Redox-Flow-Converters maximal erreichbare volumenbezogene Stackleistung kann mehr als 500 kW/m³ betragen.

Der Redox-Flow-Converter kann wahlweise zur Stromerzeugung oder zur Regeneration von Elektrolyten unter Einsatz von elektrischem Strom verwendet werden. Im erstgenannten Fall ist ein Wirkungsgrad bis ca. 98% erzielbar.

Nachfolgend werden mehrere Ausführungsbeispiele der Erfindung anhand einer Zeichnung näher erläutert. Hierin zeigen:
- Fig. 1: Komponenten eines ersten Ausführungsbeispiels eines Redox-Flow-Converters in einer Explosionsdarstellung,
- Fig. 2: Teile des Redox-Flow-Converters nach Fig. 1, nämlich eine Elektrodenplatte mit hierauf befindlichem Filz,
- Fig. 3: ein Detail des die Komponenten nach Fig. 1 umfassenden, als Zellenstapel, das heißt Stapel aus Redox-Flow-Zellen, aufgebauten Redox-Flow-Converters,
- Fig. 4: ausschnittsweise Komponenten am Fuß des Zellenstapels,
- Fig. 5: einen Ausschnitt des auf der Elektrodenplatte nach Fig. 2 befindlichen, mit Schlitzen versehenen Filzes,
- Fig. 6: ein Detail des Filzes nach Fig. 5,
- Fig. 7: in perspektivischer Darstellung eine Vielzahl stapelförmig angeordneter Redox-Flow-Zellen des Redox-Flow-Converters nach Fig. 1,
- Fig. 8 u. 9: eine alternative Ausgestaltung eines Filzes eines Redox-Flow-Converters in Ansichten analog Fig. 5 und 6,
- Fig. 10: in teilweise geschnittener Draufsicht Komponenten eines weiteren Ausführungsbeispiels eines Redox-Flow-Converters.

Die folgenden Erläuterungen beziehen sich, soweit nicht anders angegeben, auf alle Ausführungsbeispiele. Einander entsprechende oder prinzipiell gleichwirkende Teile sind in allen Figuren mit den gleichen Bezugszeichen gekennzeichnet.

Ein insgesamt mit dem Bezugszeichen 1 gekennzeichneter Redox-Flow-Converter umfasst eine Vielzahl elektrochemischer Zellen 2, das heißt Redox-Flow-Zellen. Der Redox-Flow-Converter 1 ist in jeder Ausführungsform sowohl für stationäre als auch für mobile Anwendungen geeignet. Hinsichtlich der prinzipiellen Funktion von Redox-Flow-Systemen wird auf den eingangs zitierten Stand der Technik verwiesen.

Elektrodenplatten 3 des in Stapelform aufgebauten Redox-Flow-Converters 1 sind jeweils in einem Rahmen 4 aus Kunststoff aufgenommen. Eine Membran 5 trennt jeweils eine Halbzelle einer elektrochemischen Zelle 2 von der zweiten Halbzelle derselben elektrochemischen Zelle 2. Auf beiden Seiten der Elektrodenplatte 3 befindet sich ein Filz 6, auf welchen noch näher eingegangen werden wird. Die Baugruppe aus Elektrodenplatte 3, Rahmen 4 und Filz 6 wird als Flussplatte 7 bezeichnet.

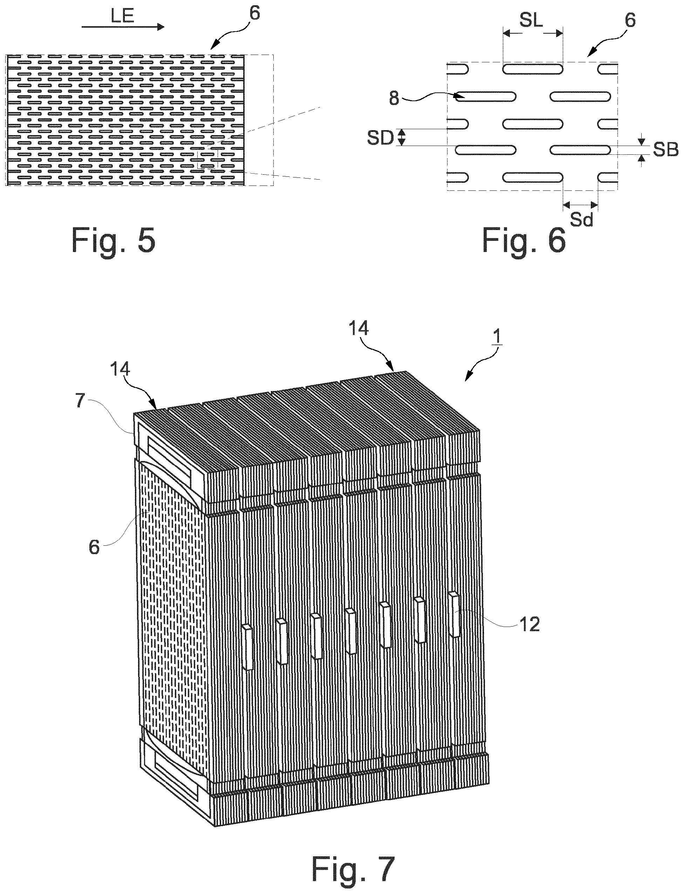

Der Redox-Flow-Converter 1 wird in den Ausführungsbeispielen mit einem Vanadium-Elektrolyten betrieben. Durch die aufeinander gestapelten Flussplatten 7 sind in Stapelrichtung verlaufende Kanäle 9 zur Elektrolytzu- und Abführung gebildet. An die Kanäle 9 sind Mäanderkanäle 10 angeschlossen. Dies gilt sowohl für die Flussplatten 7 als auch für Abschlussplatten 11. Stromanschlüsse des Redox-Flow-Converters 1 sind mit 12 bezeichnet. Die elektrochemischen Zellen 2 sind zu Zellpaketen 14 gruppiert, wobei in Figur 7 mehrere jeweils einem Zellpaket 14 zugeordnete Stromanschlüsse 12 erkennbar sind. Innerhalb der Zellpakete 14 sind die elektrochemischen Zellen 2 elektrisch parallel geschaltet. Die Zellpakete 14 wiederum sind elektrisch in Reihe geschaltet.

Die Elektrolytlösung, welche der Flussplatte 7 zugeführt wird, wird nach dem Durchströmen des Mäanderkanals 10 auf die andere Seite der Flussplatte 7 geleitet und passiert dort ein mit 13 bezeichnetes Verteilerfeld, bevor sie das mit 15 bezeichnete Aktivfeld, das heißt den Bereich, in welchem die gewünschte elektrochemische Reaktion stattfindet, erreicht.

Die Flussplatten 7 haben eine rechteckige, nicht quadratische Grundform, wobei die Elektrolytlösung im Wesentlichen in der mit LE bezeichneten Längsrichtung der Elektrodenplatte 3 und damit auch des Filzes 6 strömt. Im Filz 6 befinden sich zahlreiche Schlitze 8, die in Längsrichtung LE ausgerichtet sind. Die Länge eines jeden Schlitzes 8 ist mit SL, die Breite des Schlitzes 8 mit SB bezeichnet. In Längsrichtung LE ist zwischen zwei Schlitzen 8 ein Abstand Sd eingehalten, welcher geringer als die Länge SL ist. Der in Querrichtung der Elektrodenplatte 3 und damit der gesamten Flussplatte 7 zu messende Abstand zwischen zwei Schlitzen 8 ist mit SD bezeichnet und beträgt mehr als die Schlitzbreite SB.

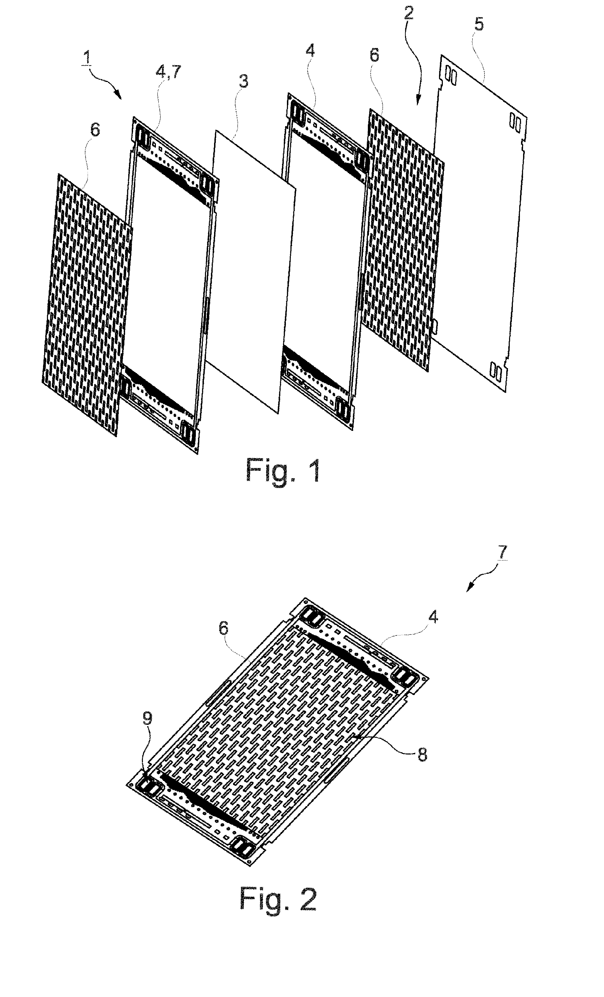

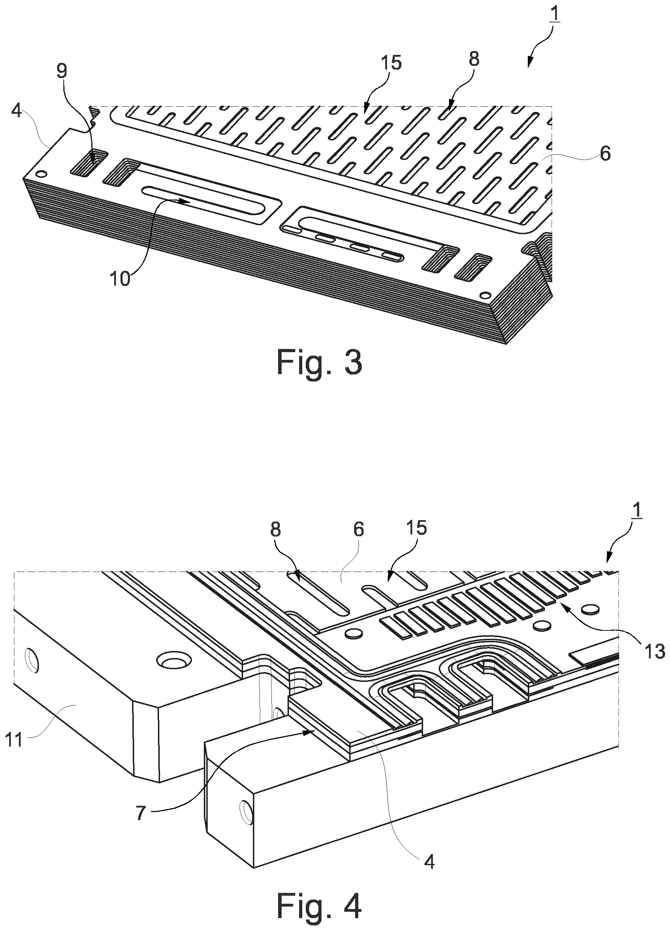

Insgesamt ist damit eine zeilenförmige Anordnung von Schlitzen 8 gegeben, wobei jeder in einer Zeile angeordnete Schlitz 8 gegenüber den in der nächsten Zeile angeordneten Schlitzen 8 in Längsrichtung LE versetzt ist, sodass lediglich die beiden Enden des Schlitzes 8 mit Schlitzen 8 in der benachbarten Zeile überlappen. Die Überlappung zwischen den Schlitzen 8 bedeutet, dass keine den Filz 6 schneidende, in Querrichtung der Flussplatte 7 verlaufende Gerade existiert, welche keinen der Schlitze 8 schneidet. Durch die zeilenförmige, in Längsrichtung LE ausgerichtete Anordnung der Schlitze 8 ist die mechanische Stabilität des Filzes 6 gegenüber einem nicht mit Schlitzen versehenen Filz nur moderat herabgesetzt. Insbesondere wirkt sich die Durchströmung des Aktivfeldes 15 mit Elektrolytlösung auch bei lang andauerndem Betrieb praktisch nicht auf die beschriebene Geometrie des Filzes 6 aus. Im Ausführungsbeispiel nach den Figuren 1 bis 7 handelt es sich bei der Elektrodenplatte 3 um eine Elektrode auf Graphitbasis.

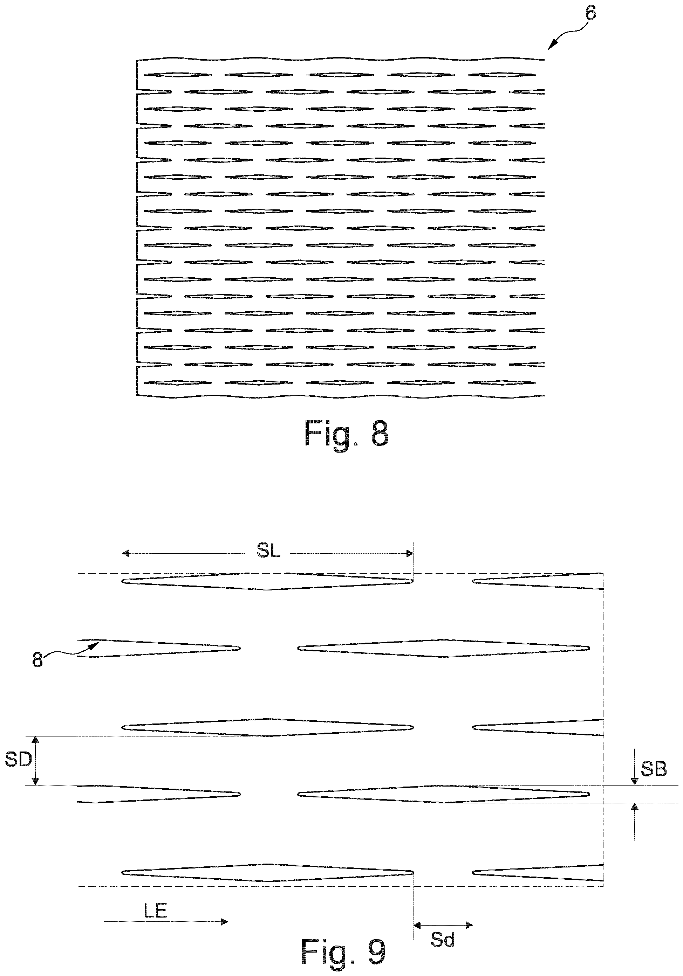

Die Figuren 8 und 9 zeigen einen modifizierten Filz 6, welcher ebenfalls für die Verwendung im Redox-Flow-Converter 1 nach den Figuren 1 bis 7 geeignet ist. Wie aus den Figuren 8 und 9 hervorgeht, haben die Schlitze 8 in diesem Fall jeweils die Form einer länglichen, vier abgerundete Ecken aufweisenden Raute, welche in Längsrichtung LE des Filzes 6 ausgerichtet ist. Was die Anordnung der Schlitze 8 in Zeilen sowie den Versatz benachbarter Zeilen in Längsrichtung betrifft, sind keine Unterschiede zum Ausführungsbeispiel nach den Figuren 1 bis 7 gegeben. Auch im Fall der Figuren 8 und 9 nehmen die Schlitze 8 insgesamt eine Fläche ein, welche im Bereich zwischen 10% und 30% der rechteckigen Gesamtfläche des Filzes 6 liegt.

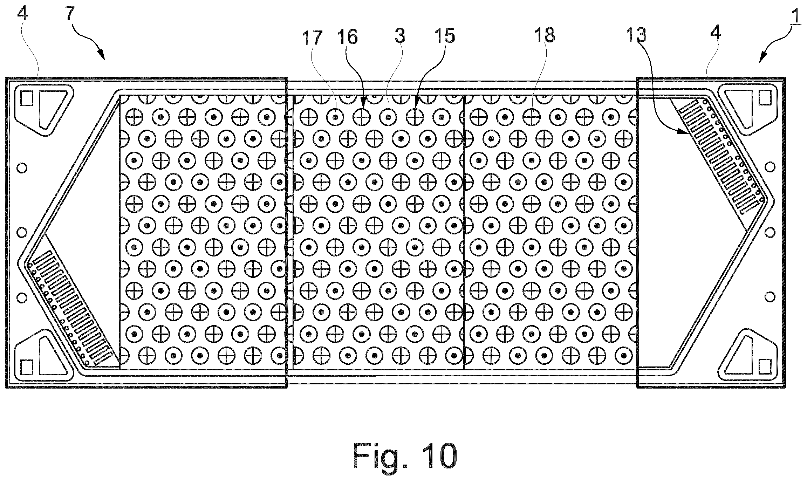

Die Figur 10 zeigt eine modifizierte Form der Elektrodenplatte 3, welche mit einem der Filze 6 nach den Figuren 1 bis 9 kombinierbar ist. Durch die Elektrodenplatte 3 des Redox-Flow-Converters 1 nach Figur 10, in welcher mehrere Schichten teilweise sichtbar sind, ist eine Prägestruktur 16 ausgebildet, die in Form einzelner näherungsweise punktförmiger Erhebungen 17 und Vertiefungen 18 vorliegt. Jede Erhebung 17 erscheint auf der gegenüberliegenden Seite der Elektrodenplatte 3 als Vertiefung 18. Dies gilt für Ausführungsformen, in welchen die Elektrodenplatte 3, wie im Fall von Figur 10, aus Blech, insbesondere Stahlblech, gefertigt ist. Ist die Elektrodenplatte 3 dagegen aus nichtmetallischen, insbesondere Graphit enthaltenden Werkstoffen gefertigt, so kann einer Erhebung 17 auf einer Seite der Elektrodenplatte 3 eine weitere Erhebung 17 auf der anderen Seite der Elektrodenplatte 3 gegenüberliegen. Im Gegensatz zu einer aus Blech gefertigten Elektrodenplatte 3 liegt damit in solchen Ausführungsbeispielen eine hochgradig uneinheitliche Dicke der Elektrodenplatte 3 vor.

Unabhängig davon, aus welchem Werkstoff die Elektrodenplatte 3 gefertigt ist, ergeben sich durch die zahlreichen inselförmigen Erhebungen 17 insgesamt V-förmige Muster der Prägestruktur 16. In gleicher Weise sind im Ausführungsbeispiel nach Figur 8 durch die Vertiefungen 18 V-förmige Muster, welche sich über das gesamte Aktivfeld 15 erstrecken, gebildet.

### Bezugszeichenliste

- 1: Redox-Flow-Converter
- 2: Elektrochemische Zelle, Redox-Flow-Zelle
- 3: Elektrodenplatte
- 4: Rahmen
- 5: Membran
- 6: Filz
- 7: Flussplatte
- 8: Schlitz
- 9: Kanal, in Stapelrichtung verlaufend
- 10: Mäanderkanal
- 11: Abschlussplatte
- 12: Stromanschluss
- 13: Verteilerfeld
- 14: Zellpaket
- 15: Aktivfeld
- 16: Prägestruktur
- 17: Erhebung
- 18: Vertiefung

- LE: Längsrichtung der Elektrodenplatte, Strömungsrichtung
- Sd: Abstand zwischen zwei Schlitzen in Längsrichtung
- SD: Abstand zwischen zwei Schlitzen in Querrichtung
- SL: Länge eines Schlitzes
- SB: Breite eines Schlitzes

## Patentansprüche

1. Redox-Flow-Converter (1), umfassend eine Mehrzahl an Redox-Flow-Zellen (2), welche Elektrodenplatten (3) sowie fluidleitende Strukturen aufweisen, **dadurch gekennzeichnet, dass** als fluidleitende Struktur ein auf der Elektrodenplatte (3) aufliegender geschlitzter Filz (6) vorgesehen ist.

2. Redox-Flow-Converter (1) nach Anspruch 1, **dadurch gekennzeichnet, dass** die Elektrodenplatte (3) eine rechteckige, nicht quadratische Grundform hat, wobei Schlitze (8), welche sich im Filz (6) befinden, in Längsrichtung der Elektrodenplatte (3) ausgerichtet sind.

3. Redox-Flow-Converter (1) nach Anspruch 2, **dadurch gekennzeichnet, dass** die Schlitze (8) in mehreren Zeilen angeordnet sind, welche sich jeweils in Längsrichtung der Elektrodenplatte erstrecken, wobei die hintereinander angeordneten Schlitze (8), welche eine erste Zeile bilden, gegenüber ebenfalls hintereinander angeordneten, eine benachbarte Zeile bildenden Schlitzen (8) in Plattenlängsrichtung versetzt sind.

4. Redox-Flow-Converter (1) nach Anspruch 3, **dadurch gekennzeichnet, dass** die in Plattenlängsrichtung zu messende Länge (SL) eines jeden Schlitzes (8) größer als der in derselben Richtung zu messende Abstand (Sd) zwischen zwei ein und derselben Zeile zuzurechnenden Schlitzen (8) ist, wobei jeder Schlitz (8) an seinen beiden Enden mit zwei Schlitzen (8) in einer benachbarten Zeile überlappt.

5. Redox-Flow-Converter (1) nach Anspruch 3 oder 4, **dadurch gekennzeichnet, dass** die Schlitze (8) jeweils eine längliche Rautenform beschreiben.

6. Redox-Flow-Converter (1) nach einem der Ansprüche 1 bis 5, **dadurch gekennzeichnet, dass** durch die Elektrodenplatte (3) ein Mäanderkanal (10) zur Leitung eines Betriebsmediums zu einem Aktivfeld (15), in welchem sich der auf der Elektrodenplatte (3) aufliegende Filz (6) befindet, gebildet ist.

7. Redox-Flow-Converter (1) nach einem der Ansprüche 1 bis 6, **dadurch gekennzeichnet, dass** die Elektrodenplatte (3) eine dreidimensionale Strukturierung aufweist.

8. Redox-Flow-Converter (1) nach Anspruch 7, **dadurch gekennzeichnet, dass** die Strukturierung der Elektrodenplatte (3) zahlreiche kreisförmige Erhebungen (17) aufweist, durch welche mehrere ineinander greifende V-Formen beschrieben sind.

9. Redox-Flow-Converter (1) nach Anspruch 7 oder 8, **dadurch gekennzeichnet, dass** die Elektrodenplatte (3) aus Blech gefertigt ist.

10. Redox-Flow-Converter (1) nach Anspruch 7 oder 8, **dadurch gekennzeichnet, dass** die Elektrodenplatte (3) Graphit umfasst.
